# EUROPÄISCHE PATENTSCHRIFT

(11) **EP 4 074 960 B1**
(45) Veröffentlichungstag und Bekanntmachung des Hinweises auf die Patenterteilung: **22.07.2026**
(21) Anmeldenummer: 21168088.9
(22) Anmeldetag: 13.04.2021
(51) Int. Cl.: F03D 7/02, F03D 7/04

(54) **VERFAHREN ZUM BETREIBEN EINES WINDPARKS UND WINDPARK**
WIND FARM AND METHOD FOR OPERATION OF A WIND FARM
PROCÉDÉ DE FONCTIONNEMENT D'UNE FERME ÉOLIENNE ET FERME ÉOLIENNE

(43) Veröffentlichungstag der Anmeldung: 19.10.2022
(73) Patentinhaber: Wobben Properties GmbH, 26607 Aurich (DE)
(72) Erfinder: Messing, Ralf, 26605 Aurich (DE); Busker, Kai, 26629 Großefehn (DE)
(74) Vertreter: Eisenführ Speiser

(56) Entgegenhaltungen:
- EP-A1- 2 235 367
- WO-A1-2014/026688
- US-A1- 2011 301 769
- US-B2- 9 018 782

## Beschreibung

Die vorliegende Erfindung betrifft ein Verfahren zum Betreiben eines Windparks mit mindestens zwei Windenergieanlagen und einen zugehörigen Windpark.

Windenergieanlagen zur Erzeugung elektrischen Stroms aus Wind sind bekannt. Typischerweise enthalten moderne Windenergieanlagen einen aerodynamischen Rotor mit horizontaler Achse, an der wenigstens ein um seine Längsachse verdrehbares Rotorblatt angeordnet ist.

Mehrere Windenergieanlagen können in einem Windpark mit einem gemeinsamen Netzeinspeisepunkt zur Einspeisung der elektrischen Energie in ein elektrisches Versorgungsnetz verbunden sein. In diesem Fall kann ein Parkregler des Windparks vorgesehen sein, der den Betrieb der einzelnen Windenergieanlagen beeinflusst und letztlich die Einspeisung des Windparks in das elektrische Versorgungsnetz koordiniert.

Von Seiten des Betreibers des elektrischen Versorgungsnetzes können Anforderungen an die eingespeiste elektrische Leistung gestellt werden. Diesen netzseitigen Anforderungen muss ein Windpark nachkommen, um beispielsweise geltende Normen zu erfüllen. Dies schließt insbesondere eine Forderung nach einer maximal erzeugten elektrischen Leistung des Windparks ein, die beispielsweise einen von dem Versorgungsnetz bereitgestellten Schwellwert, genannt Leistungs-Sollwert, nicht überschreiten darf.

Liegt der bereitgestellte Schwellwert beispielsweise unterhalb einer Nennleistung des Windparks und ermöglichen die herrschenden Windbedingungen einen Betrieb der Windenergieanlagen oberhalb des bereitgestellten Schwellwertes, so muss der Parkregler eingreifen, damit die Windenergieanlage nicht durch einen Betrieb in einem leistungsoptimierten Betriebsmodus elektrische Leistung erzeugen, die den bereitgestellten Schwellwert überschreiten.

US 9,018,782 B2 offenbart, dass Windturbinen einer Windkraftanlage selektiv überbewertet ("over-rated") werden, indem die Differenz zwischen den Nenn- und tatsächlichen Kraftwerksausgaben gemessen wird und auf der Grundlage dieser Differenz ein Überbemessungs-Anforderungssignal abgeleitet wird, das an jede Turbine gesendet wird. Derselbe Wert kann an jede Turbine gesendet werden. Alternativ kann jeder Turbine basierend auf einer Optimierung der Turbine ihr eigener Überbemessungsbetrag gegeben werden. Eine Überbewertung kann auch verwendet werden, wenn externe wirtschaftliche Faktoren wie Energiekosten ausreichend hoch sind, um mögliche schädliche Auswirkungen einer Überbewertung zu überwiegen. Die Ermüdungslebensdauer von Turbinen und ihren kritischen Komponenten kann auch bei der Entscheidung berücksichtigt werden, ob und in welchem Umfang ein Überbemessungsbefehl implementiert werden soll.

WO 2009/082204 A1 offenbart einen Windturbinenpark umfassend eine Gruppe ähnlicher Windturbinen, wobei jede Windturbine einen Turm umfasst, der eine Gondel mit einer Anzahl von Rotorblättern trägt. Jede einzelne Windkraftanlage ist transformatorlos und umfasst einen Hochspannungs-Asynchrongenerator zur Stromerzeugung im Wechselstrommodus. Der Windturbinenpark umfasst einen zentralen Transformator für eine Gruppe ähnlicher transformatorloser Windturbinen zum Transformieren des erzeugten Stroms auf eine höhere Spannung, eine zentrale Steuereinheit zum Optimieren der Stromerzeugung der Gruppe ähnlicher transformatorloser Windturbinen und ein HGÜ-System zum Transportieren des produzierten Stroms im Gleichstrommodus in ein öffentliches Stromnetz.

Vor diesem Hintergrund war es eine Aufgabe der vorliegenden Erfindung, ein Verfahren zum Betreiben eines Windparks und einen korrespondieren Windpark bereitzustellen, der einen normenkonformen Betrieb möglichst effektiv ermöglicht.

In einem Aspekt wird ein Verfahren zum Betreiben eines Windparks mit mindestens zwei Windenergieanlagen vorgeschlagen, wobei die Windenergieanlagen jeweils einen aerodynamischen Rotor umfassen, wobei die Rotoren jeweils einen aerodynamischen Kennwert aufweisen, und wobei das Verfahren die folgenden Schritte aufweist: i) Erhalten eines Leistungs-Sollwertes des Windparks, insbesondere eines Sollwertes der einzuspeisenden elektrischen Leistung des Windparks, ii) Ermitteln eines Leistungs-Istwertes des Windparks als Summe elektrischer Ist-Leistungen der betriebenen Windenergieanlagen. Das Verfahren weist ferner auf: iii) Bestimmen einer Zulässigkeit eines leistungsreduzierten Betriebsmodus jeder der Windenergieanlagen des Windparks anhand des zugehörigen aerodynamischen Kennwertes, und iv) Betreiben der Windenergieanlagen des Windparks derart, dass jede der betriebenen Windenergieanlagen in einem zulässigen Betriebsmodus betrieben wird und der ermittelte Leistungs-Istwert den erhaltenen Leistungs-Sollwert nicht übersteigt.

Der Leistungs-Sollwert kann beispielsweise von einem Netzbetreiber bereitgestellt werden und ein Maximalwert der von dem Windpark in ein Stromversorgungsnetz einzuspeisenden elektrischen Leistung sein. Es ist bekannt, dass ein Windpark in Reaktion auf einen derartigen Leistungs-Sollwert gewährleistet, dass die eingespeiste elektrische Leistung diesen Leistung-Sollwert nicht überschreitet.

Der Begriff "Sollwert" ist hier also als ein Maximalwert zu verstehen, der unter der Voraussetzung eines hinreichenden Windes erreicht wird. Es ist also eine Voraussetzung, dass die Windbedingungen das Erreichen des Sollwertes überhaupt zulassen. Üblicherweise werden Windenergieanlagen derart betrieben, dass unter Berücksichtigung diverser Randbedingungen die maximale elektrische Energie erzeugt wird.

Auch wenn es sich demnach nicht um einen Sollwert im klassischen regelungstechnischen Sinn handelt, so hat sich der Begriff im Bereich der Windenergietechnik für den maximalen Wert der einzuspeisenden elektrischen Leistung etabliert.

Besonders bevorzugt kann der Leistungs-Sollwert auf einen beliebigen Wert zwischen 0 kW, also keiner eingespeisten Leistung, und einer Nennleistung des Windparks liegen. Es ist somit eine stufenlose Abregelung ermöglicht.

Der Leistungs-Istwert, der ermittelt wird, ist insbesondere ein Momentanwert, der vorzugsweise eine hohe Auflösung hat, besonders bevorzugt einen Zeitraum von höchstens 1 Sekunde beschreibt. Anders ausgedrückt, der Leistungs-Istwert ist kein über einen längeren Zeitraum gemittelter Leistungswert, sondern kann als der tatsächlich momentan in das elektrische Versorgungsnetz am Netzeinspeisepunkt eingespeiste Leistungswert bezeichnet werden.

Hierfür kann der Leistungs-Istwert an einem zentralen Einspeisepunkt des Windparks, an dem die Summe der elektrischen Leistungen der einzelnen Windenergieanlagen zusammenläuft, gemessen werden. Alternativ oder zusätzlich können die einzelnen Windenergieanlagen einen jeweiligen Leistungs-Istwert per Datenkommunikation an einen zentralen Parkrechner übertragen, auf dem der Schritt des Ermittelns des Leistungs-Istwertes dann durch Aufsummieren der einzelnen übertragenen Werte der einzelnen Windenergieanlagen erfolgt.

Besonders bevorzugt können auch beide Verfahren zum Bestimmen des Leistungs-Istwertes herangezogen werden, um eventuelle Abweichungen zwischen den beiden bestimmten Werten zu detektieren und damit Fehlfunktionen zu erkennen.

Der aerodynamische Kennwert ist ein Kennwert, der wenigstens eine aerodynamische Eigenschaft des Rotorblattes kennzeichnet. Besonders vorteilhaft ist die aerodynamische Eigenschaft das Auftreten eines Strömungsabrisses, insbesondere eines Strömungsabrisses auf der Druckseite in einem äußeren Bereich des Rotorblattes, was auch als negativer Stall bekannt ist. Auch andere aerodynamische Eigenschaften des Rotorblattes können durch den aerodynamischen Kennwert angegeben werden.

Der aerodynamische Kennwert ist nicht notwendigerweise konstant, sondern hängt vorzugsweise von Umgebungs- und/oder Betriebsbedingungen ab. Besonders vorteilhaft ist es daher, den aerodynamischen Kennwert parametriert bereitzustellen. Beispielsweise kann der aerodynamische Kennwert von den Windbedingungen, insbesondere einer Windgeschwindigkeit, einer Turbulenzintensität, einer Windscherung, etc., und/oder von Betriebsbedingungen der Windenergieanlage, wie einer Drehzahl, einer Schräganströmung und/oder einem Einstellwinkel der Rotorblätter abhängen. Die Schräganströmung bezeichnet hier vorzugsweise einen Winkel zwischen der Rotorachse des Rotors und der Windrichtung.

Vorzugsweise ermöglicht also der aerodynamische Kennwert, eine Zulässigkeit eines bestimmten Betriebsmodus zu bewerten. Klassischerweise werden Windenergieanlagen in einem ertragsmaximierten Betriebsmodus betrieben, bei der beispielsweise eine Drehzahl des Rotors und/oder ein Einstell- bzw. Pitchwinkel der Rotorblätter derart geregelt ist, dass die erzeugte elektrische Leistung maximiert ist. In anderen Betriebsmodi sind auch andere Randbedingungen möglich, wie beispielsweise eine maximal zulässige Geräuschentwicklung. Weitere Betriebsmodi können leistungsreduzierte Betriebsmodi sein, in denen die Randbedingung für den Betrieb eine maximal zu erzeugende elektrische Leistung sein kann. Dieser Betrieb geht insbesondere auf Anforderungen eines Betreibers eines elektrischen Versorgungsnetzes zurück, wobei auch andere Gründe die Notwendigkeit dieses Betriebsmodus bedingen können. Die Beschränkung der elektrischen Leistung kann vorzugsweise stufenlos zwischen keiner Leistungserzeugung und einer Nenn- oder Maximalleistung der Windenergieanlage verlaufen.

Insbesondere kann in einigen Fällen ein zentraler Parkrechner, der beispielsweise das Betreiben des Windparks koordiniert, den einzelnen Windenergieanlagen Vorgaben für den Betrieb machen, beispielsweise Randbedingungen für den Betriebsmodus aufgeben. Diese Randbedingungen können beispielsweise die oben genannten Leistungsbeschränkungen oder auch andere Bedingungen sein.

Ein zentraler Parkrechner, der beispielsweise das Verfahren gemäß der Offenbarung wenigstens teilweise umsetzt, kommuniziert hierzu üblicherweise Anforderungen hinsichtlich des Betriebs an die einzelnen Windenergieanlagen. Der Parkrechner weiß nicht unmittelbar, ob eine der Windenergieanlagen den Anforderungen folgen kann oder, beispielsweise, eine zu hohe Drosselung einer der Windenergieanlagen auch unerwünschte Folgen hat.

Unter Verwendung des aerodynamischen Kennwertes, der für jede der Windenergieanlagen bereitgestellt wird, kann nun die Zulässigkeit des avisierten Betriebsmodus bestimmt werden. Die Bestimmung kann durch die Windenergieanlage selbst erfolgen, und das Ergebnis beispielsweise an den zentralen Parkrechner übertragen werden. Alternativ oder zusätzlich kann der Parkrechner oder eine andere zentrale Steuereinheit die Bestimmung für die einzelnen Windenergieanlagen zentral vornehmen. Hierfür können der zentralen Steuereinheit die notwendigen aerodynamischen Kennwerte bereitgestellt werden oder diese darin bereits vorgespeichert sein.

Besonders bevorzugt handelt es sich bei dem aerodynamischen Kennwert um einen unveränderlichen Wert bzw. eine unveränderlichen parametrierten Wert, der sich über die Lebensdauer der Windenergieanlage nicht oder nicht wesentlich ändert.

Vorzugsweise enthält das Verfahren ferner ein Bestimmen, anhand des erhaltenen Leistungs-Sollwertes, ob ein leistungsreduzierter Betrieb wenigstens einer der Windenergieanlagen des Windparks erforderlich ist.

Ein leistungsreduzierter Betrieb ist nur dann nötig, wenn die Windenergieanlagen auch in einem leistungsoptimierten Betrieb eine Summe elektrischer Ist-Leistungen erzeugen, die den Leistungs-Sollwert überschreiten. Dies ist insbesondere dann nicht der Fall, wenn die Windgeschwindigkeit zu niedrig ist, so dass beispielsweise ein Volllastbetrieb der jeweiligen Windenergieanlagen nicht nötig ist. In dem anderen Fall, wenn nämlich die Summe der elektrischen Ist-Leistungen den Leistungs-Sollwert überschreitet, muss wenigstens eine Windenergieanlage in einem leistungsreduzierten Betriebsmodus betrieben werden, damit der Leistungs-Sollwert nicht überschritten wird.

Bekannt ist, dass eine geforderte Leistungsreduktion gleichmäßig auf die einzelnen Windenergieanlagen des Windparks aufgeteilt wird. Beispielsweise wird dann von dem zentralen Parkrechner gefordert, dass alle der Windenergieanlagen eine Leistungsreduktion um einen bestimmten Leistungsbetrag, bspw. absoluten Leistungsbetrag wie 500 kW oder relativen Leistungsbetrag wie 10% der Nennleistung, bzw. auf einen bestimmten Leistungsbetrag, bspw. einen absoluten Leistungsbetrag wie 2 MW oder einen relativen Leistungsbetrag wie 50% der Nennleistung, angewiesen werden. Die angeführten Zahlenwerte sind natürlich nur beispielhaft zu verstehen.

Alternativ ist aber auch eine ungleichmäßige Leistungsbeschränkung, d.h. eine ungleichmäßige Drosselung der Windenergieanlagen, vorstellbar. Die Schwierigkeit, die durch die vorliegende Offenbarung gelöst wird, ist hierbei die Priorisierung und Gewichtung der Leistungsdrosselungen der einzelnen Windenergieanlagen des Windparks.

Vorzugsweise wird wenigstens eine der Windenergieanlagen des Windparks nicht betrieben, damit wenigstens eine der verbleibenden Windenergieanlagen in einem zulässigen Betriebsmodus betreibbar ist.

Es ist eine Erkenntnis der vorliegenden Offenbarung, dass besonders die stark abgeregelten Betriebsmodi für Windenergieanlagen kritisch sein können, insbesondere bei vergleichsweise starkem Wind. Durch die in solchen Betriebsmodi üblicherweise hohen negativen Anstellwinkel besteht bei einer hohen Windgeschwindigkeit gerade in äußeren Blattbereichen die Gefahr eines Strömungsabrisses auf der Druckseite des Rotorblattes, was auch als negativer Stall bekannt ist. Negativer Stall führt beispielsweise zu hohen Lasten am Rotorblatt.

Indem nun wenigstens eine der Windenergieanlagen nicht betrieben wird, können die Abregelungen der verbleibenden Windenergieanlagen weniger stark ausgeprägt sein, ohne dass in Summe der Leistungs-Sollwert überschritten wird. Damit kann gewährleistet sein, dass keine Windenergieanlage in einem unzulässigen, beispielsweise einem stark abgeregelten Betriebsmodus, betrieben wird. In diesem Zusammenhang wird als "nicht betrieben werden" verstanden, dass die Windenergieanlage in einem Betriebsmodus betrieben wird, in dem keine elektrische Leistung erzeugt wird. Die Anlage kann also beispielsweise abgeschaltet sein oder sich in einem Trudelbetrieb befinden, wobei auch andere Betriebsmodi vorstellbar sind, in denen keine elektrische Energie erzeugt wird.

Vorzugsweise ist der aerodynamische Kennwert für eine Strömungsablösung, insbesondere auf einer Druckseite eines Rotorblattes des Rotors, indikativ.

Damit kann unter Bereitstellung des aerodynamischen Kennwertes eine Strömungsablösung vermieden werden, indem für aktuelle Umgebungsbedingungen kritische Betriebsmodi als unzulässig gekennzeichnet und entsprechend vorzugsweise nicht angefahren werden.

Vorzugsweise umfasst der aerodynamische Kennwert einen kritischen Pitchwinkel, wobei die Strömungsablösung insbesondere bei einer Überschreitung des kritischen Pitchwinkels erfolgt.

Die Gefahr einer Strömungsablösung wird größer, je mehr die Leistung einer Windenergieanlage gedrosselt werden muss. Dies geschieht bei konstanter Leistung/Drehzahl mit Herausdrehen des Blattes aus dem Wind, was als eine Anhebung oder Erhöhen des Pitchwinkels bezeichnet wird. Eine Überschreitung des kritischen Pitchwinkels entspricht also der Situation, dass das Rotorblatt zu weit aus dem Wind herausgedreht ist und in der Folge eine Strömungsablösung möglich ist.

Durch die Veränderung des Pitchwinkels wird der Anstellwinkel der Rotorblätter verändert, um den aerodynamischen Wirkungsgrad des Rotors zu beeinflussen. Insbesondere ist hier bekannt, in einem Volllastbetrieb und auch einem leistungsreduzierten Betrieb den aerodynamischen Wirkungsgrad des Rotors derart zu beschränken, dass die gewünschte elektrische Leistung am Generatorausgang, beispielsweise die Nennleistung des Generators oder die beschränkte Soll-Leistung, nicht überschritten wird. Wird das Rotorblatt durch eine Anhebung des Pitchwinkels aerodynamisch zu unvorteilhaft eingestellt, so droht eine Strömungsablösung auf der Druckseite. Der aerodynamische Kennwert gibt demnach in dieser Ausführung an, ob der kritische Pitchwinkel erreicht wird oder nicht.

Vorzugsweise wird der aerodynamische Kennwert anhand eines Kennfeldes ermittelt.

Ein Kennfeld zeichnet sich durch die besonders einfache informationstechnische Umsetzung aus. Natürlich sind auch andere Möglichkeiten zur Bestimmung des aerodynamischen Kennwertes anhand von Parametern möglich.

Vorzugsweise bestimmt das Kennfeld den aerodynamischen Kennwert als Funktion einer Drehzahl der Windenergieanlage, einer Leistungsstufe und optional eines Verschmutzungsgrades des Rotors.

Vorzugsweise wird jede der Windenergieanlagen innerhalb des zulässigen Raumes des Kennfeldes betrieben.

Hierbei wird bevorzugt, dass nicht das komplette Kennfeld permanent ausgewertet werden muss, um sämtliche der zulässigen Betriebsmodi zu erhalten. Wenn beispielsweise eine Leistungssteigerung bzw. eine Leistungsstufe vorgegeben wird, so kann das Kennfeld für diese Leistungsstufe die zulässigen Betriebsmodi vorgeben. Falls kein zulässiger Betriebsmodus für die angeforderte Leistungsstufe verfügbar ist, beispielsweise, weil die Windgeschwindigkeit zu hoch ist oder aus anderen Gründen, kann in einer Ausführung die Windenergieanlage auf einer anderen Leistungsstufe betrieben oder abgeschaltet werden.

In dieser Ausführung umfasst der aerodynamische Kennwert einen kritischen Pitchwinkel. Besonders bevorzugt wird der Pitchwinkel mit dem kritischen Pitchwinkel verglichen, um eine Zulässigkeit des Betriebsmodus festzustellen. Der Betriebsmodus muss hierbei an der Windenergieanlage nicht eingestellt sein, es ist ausreichend, wenn der aerodynamische Kennwert herangezogen wird, um festzustellen, ob der sich einstellende Betrieb einen Pitchwinkel erwarten lässt, der außerhalb des zulässigen Bereiches liegt, insbesondere oberhalb des kritischen Pitchwinkels liegt.

Für größere Scherungswerte kann der sich einstellende Pitchwinkel über den Rotorazimuth gemittelt werden, um einen mittleren Pitchwinkel zu erhalten. Damit können auch eventuelle Einzelblattverstellungen, bei denen der Pitchwinkel einzelner Rotorblätter teilweise oder vollständig unabhängig voneinander eingestellt wird, reduziert werden und einfach mittels des aerodynamischen Kennwertes bewertet werden.

Vorzugsweise wird der Betriebsmodus aus den zulässigen Betriebsmodi der einzelnen Anlagen anhand wenigstens einer der nachfolgenden Kriterien ausgewählt: a) Vergütung; b) Last; c) Schall.

In dieser Ausführung sind demnach mehrere Betriebsmodi aus den verfügbaren Betriebsmodi der Windenergieanlage zulässig. Zu entscheiden ist, welcher der zulässigen Betriebsmodi von der Windenergieanlage für den Betrieb gewählt wird. Die Auswahl kann entweder von der Windenergieanlage selbst oder von einer zentralen Steuereinheit, beispielsweise dem Parkrechner oder einem Server, getroffen werden.

Bei den Kriterien für die Auswahl des Betriebsmodus aus den zulässigen Betriebsmodi eignen sich eine Vergütung der von der Windenergieanlage erzeugten elektrischen Leistung, auf die Windenergieanlage wirkende Lasten und/oder durch die Windenergieanlage erzeugte Schallemissionen. Demnach werden Bedingungen vorgeschlagen, aus denen unter der weiteren Nebenbedingung der Gesamtleistung der Windenergieanlagen, die den Leistungs-Sollwert nicht überschreitet, und der Zulässigkeit der jeweiligen Betriebsmodi letztlich der Betriebsmodus gewählt wird.

Es kann der Fall vorliegen, dass für unterschiedliche Windenergieanlagen des Windparks unterschiedliche monetäre Ausgleichszahlungen für die erzeugte Energie geleistet werden, die als Einspeisevergütung bezeichnet werden. Es wird bevorzugt, dass diejenigen Windenergieanlagen, die eine höhere Einspeisevergütung erhalten, weniger abgeregelt werden als diejenigen Anlagen, für die eine niedrigere Einspeisevergütung gezahlt wird.

Zudem kann in einer Ausführung gewünscht sein, dass diejenigen Windenergieanlagen, die näher an bewohnter Bebauung stehen, derart betrieben werden, dass sie geringere Geräuschemissionen verursachen. Während typischerweise eine stärkere Abregelung mit niedrigerer Schallemission einhergeht, so kann sich dies besonders bei sehr starker Abregelung umkehren. Besonders bevorzugt wird daher der Betrieb sämtlicher der Windenergieanlagen unter der Nebenbedingung möglichst geringer Schallemission an relevanten Orten optimiert.

Schließlich kann bevorzugt werde, dass Restlasten bzw. -lebensdauern bei der Wahl des Betriebsmodus berücksichtigt werden. So sind beide Varianten vorstellbar, die entweder eine Verlängerung der Restlebensdauer oder eine Verkürzung der Restlebensdauer zur Folge haben. Besonders bevorzugt werden die Restlebensdauern der Windenergieanlagen des Windparks aneinander angeglichen, so dass eine Erneuerung des gesamten Windparks möglichst mit dem Lebensdauerende sämtlicher Windenergieanlagen übereinstimmt. Alternativ kann aber auch eine sukzessive Erneuerung der Windenergieanlagen erfolgen, wobei es in diesem Fall bevorzugt ist, dass die Windenergieanlagen ihr jeweiliges Lebensdauerende nicht gleichzeitig sondern gestaffelt erreichen.

Vorzugsweise wird der aerodynamische Kennwert individuell für jede der Windenergieanlagen bestimmt.

Damit ist auch in einem Fall, in dem mehrere Windenergieanlagen beispielsweise unterschiedlichen Typs oder unterschiedlicher Hersteller in einem gemeinsamen Windpark betrieben werden ein optimierter Betrieb des Windparks und gleichzeitig jeder der einzelnen Windenergieanlagen möglich.

Vorzugsweise umfasst das Bestimmen einer Zulässigkeit eines leistungsreduzierten Betriebsmodus jeder der Windenergieanlagen eine Bestimmung einer Soll-Drehzahl des aerodynamischen Rotors und der aerodynamische Kennwert wird bei der Bestimmung der Soll-Drehzahl des aerodynamischen Rotors berücksichtigt.

Vorzugsweise umfasst der Betrieb der Windenergieanlage in dem leistungsreduzierten Betriebsmodus eine Reduktion der Soll-Drehzahl in einem ersten Betriebsbereich und eine Erhöhung der Soll-Drehzahl in einem zweiten Betriebsbereich.

Vorzugsweise umfasst der Betrieb der Windenergieanlage in dem leistungsreduzierten Betriebsmodus eine Veränderung, insbesondere eine Erhöhung, eines Pitchwinkels des Rotors.

Vorzugsweise ist der aerodynamische Rotor mit einem elektrischen Generator gekoppelt und der Betrieb der Windenergieanlage im dem leistungsreduzierten Betriebsmodus umfasst eine Veränderung, insbesondere eine Reduktion, eines Generatormoments des elektrischen Generators.

Vorzugsweise ist die Leistung, insbesondere die elektrische Wirkleistung am Generatorausgang, der Windenergieanlage in dem leistungsreduzierten Betriebsmodus auf einen vorbestimmten Leistungswert und/oder um einen vorbestimmten Leistungsbetrag reduziert.

Vorzugsweise wird zumindest einer der aerodynamischen Kennwerte bei der Bestimmung zumindest einer Soll-Drehzahl einer der aerodynamischen Rotoren berücksichtigt.

Ferner wird ein Windpark mit wenigstens zwei Windenergieanlagen und einer Windparksteuerung bereitgestellt, wobei die Windparksteuerung zur Durchführung des erfindungsgemäßen Verfahrens ausgebildet ist.

Der Windpark gemäß diesem Aspekt ermöglicht die gleichen Vorteile wie das zuvor beschriebene Verfahren und ist ebenso mit Vorteil mit sämtlichen bevorzugten Ausgestaltungen kombinierbar.

Weitere Vorteile und besondere Ausgestaltungen werden nachfolgend mit Verweis auf die beigefügten Figuren beschrieben. Hierbei zeigen:
Fig. 1 schematisch und exemplarisch eine Windenergieanlage;
Fig. 2 schematisch und exemplarisch einen Windpark, und
Fig. 3 schematisch und exemplarisch ein Flussdiagramm eines Verfahrens.

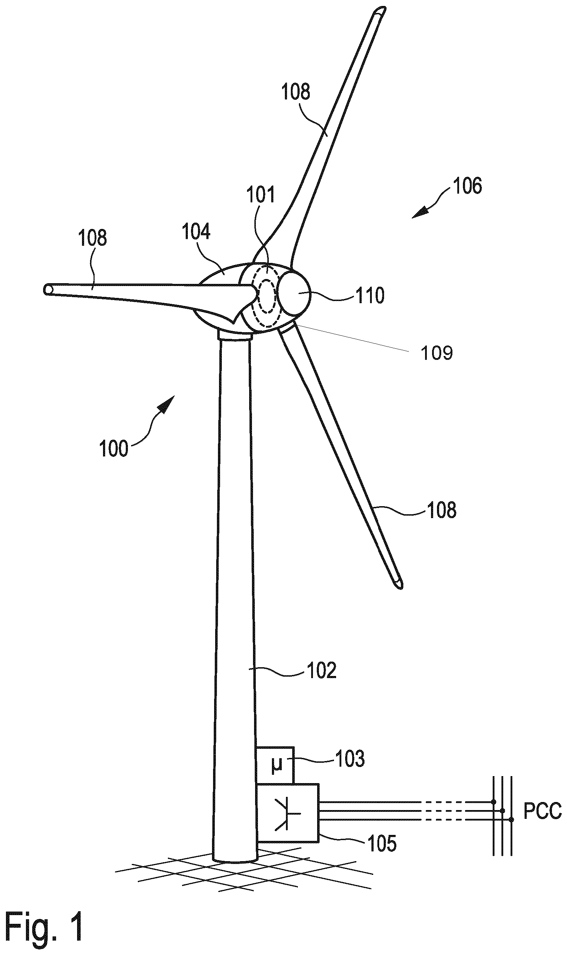

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators 101, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

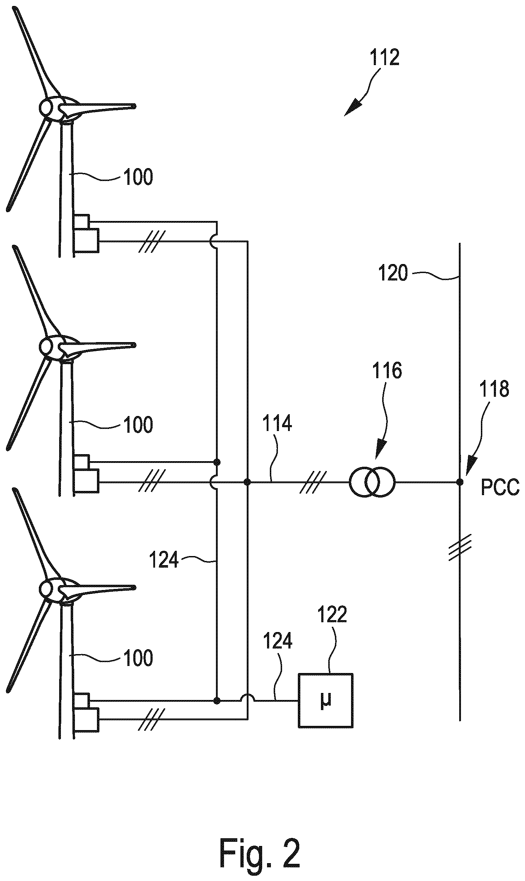

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Der zentrale Parkrechner 122 ist hierbei funktional zu verstehen als die Komponente, die zur Ausführung der zentralen Parksteuerung ausgebildet ist. Der zentrale Parkrechner 122 und/oder einzelne Komponenten davon können auch räumlich entfernt, beispielsweise in einem Server oder in einer Cloud, bereitgestellt sein.

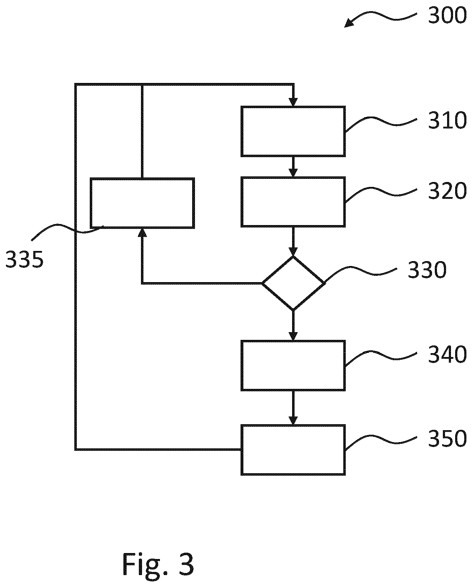

Fig. 3 zeigt schematisch und exemplarisch ein Flussdiagramm eines Verfahrens 300 zum Betreiben eines Windparks 112, wie es beispielsweise vollständig oder teilweise auf dem zentralen Parkrechner 122 und/oder den einzelnen Windenergieanlagen 100 des Windparks 112 ausgeführt wird. Die Aufteilung der Durchführung der Verfahrensschritte zwischen dem zentralen Parkrechner 122 und den einzelnen Windenergieanlagen 100 kann je nach Implementierung unterschiedlich sein.

Ein Betreiber eines Windparks 112 garantiert eine vorzugsweise stufenlose Leistungsabregelung zwischen 0-100% am Einspeisepunkt 118 bzw. Netzanschlusspunkt PCC. Hierbei ist bekannt, von dem Parkrechner 122 aus an alle Windenergieanlagen 100 des Windparks 112 denselben Wirkleistungssteuerwert zu senden. Das Verfahren 300 ermöglicht eine Einzelanlagenregelung mit einem Betrieb der individuellen Windenergieanlagen 100 mit individuellen Wirkleistungssteuerwerten, wobei jede Windenergieanlage 100 mit unterschiedlichen Leistungsabregelungen beaufschlagt werden kann. Hierbei kann der zentrale Parkrechner 122 den Windenergieanlagen 100 entweder direkt einen Wirkleistungssteuerwert vorgeben, oder auf andere Art und Weise einen von den Windenergieanlagen 100 einzuregelnden Betriebsmodus vorgeben bzw. kommunizieren.

Die Leistungsabregelung kann klassisch drehzahlreduziert auf der leistungsoptimalen Betriebskennlinie erfolgen, wobei auch andere Arten der Leistungsabregelung bekannt sind.

Das Verfahren 100 ermöglicht nun, dass die Auswirkungen der Leistungsabregelung auf die Rotorblattaerodynamik betrachtet werden und damit bei hohen Windgeschwindigkeiten insbesondere die Gefahr der Strömungsablösung auf der Druckseite der Profile der Rotorblätter 108 im Außenbereich des Rotorblattes 108. Derartige Strömungsablösungen resultieren unter anderem in starken Windgeräuschen sowie in aeroelastischen Instabilitäten und hohen Lasten. Die insbesondere windgeschwindigkeitsabhängige Sensitivität für diese Problematik variiert über verschiedene Typen von Windenergieanlagen 100 bzw. Rotorblättern 108.

Das Verfahren 300 ermöglicht nun eine Einzelanlagenregelung auf unterschiedliche Leistungsniveaus unter Einhaltung der Randbedingung einer ablösefreien Profilumströmung am Rotorblatt. Zusätzlich kann unter Einhaltung dieser Randbedingung ein vergütungsoptimierter Betrieb erfolgen, beispielsweise, wenn unterschiedliche Windenergieanlagen 100 unterschiedliche Einspeisevergütungen erhalten.

Hierfür umfasst das Verfahren 300 zunächst einen Schritt 310 des Erhaltens eines Leistungs-Sollwertes des Windparks 112, insbesondere eines Sollwertes der einzuspeisenden elektrischen Leistung des Windparks 112. Der Leistungs-Sollwert wird beispielsweise von dem Netzbetreiber des elektrischen Versorgungsnetzes bereitgestellt und kann bei genügend verfügbarer Windleistung eine Leistungsabregelung des Windparks bzw. wenigstens einiger der Windenergieanlagen 100 erfordern.

In einem Schritt 320 wir hierfür ein Leistungs-Istwert des Windparks 112 als Summe elektrischer Ist-Leistungen der betriebenen Windenergieanlagen 100 ermittelt. Wenn der Leistungs-Istwert den Leistungs-Sollwert übersteigt, muss der Parkrechner 122 eingreifen und eine Leistungsabregelung bewirken, damit der Leistungs-Sollwert als Maximalwert eingehalten wird. Falls der Leistungs-Istwert unterhalb des Leistungs-Sollwertes liegt, kann der Parkrechner 122 vorzugsweise gewährleisten, dass jede der Windenergieanlagen 100 - sofern nicht durch andere Nebenbedingungen wie Schallerzeugung ausgeschlossen - in einem leistungsoptimierten Betriebsmodus betrieben wird. Damit versucht der Parkrechner 122 möglichst viel elektrische Wirkleistung zu erzeugen, um den Leistungs-Sollwert zu erreichen, wobei das Erreichen von der Windgeschwindigkeit abhängig ist.

Das Verfahren betrifft nun in einem Schritt 330 die Überprüfung, ob ein leistungsreduzierter Betrieb einer der Windenergieanlagen grundsätzlich erforderlich ist. Falls nein, ist keine Abregelung einer Windenergieanlage 100 nötig und jede der Windenergieanlagen 100 kann in einem Schritt 335 in dem leistungsoptimierten Betriebsmodus betrieben werden.

Falls eine Abregelung, das heißt ein leistungsreduzierter Betrieb, wenigstens einer der Windenergieanlagen 100 nötig ist, wird in einem weiteren Schritt 340 eine Zulässigkeit eines leistungsreduzierten Betriebsmodus jeder der Windenergieanlagen 100 des Windparks anhand eines zugehörigen aerodynamischen Kennwertes bestimmt. Der aerodynamische Kennwert ist vorzugsweise als Kennfeld ausgebildet und eine Funktion mehrerer Eingangsgrößen, beispielsweise einer Drehzahl der Windenergieanlage 100, einer Leistungsstufe und/oder eines Verschmutzungsgrades des Rotors. Vorzugsweise kann dann in Abhängigkeit der herrschenden Windgeschwindigkeit ein aerodynamischer Kennwert erhalten werden, der angibt, ob im Betrieb in dem zu überprüfenden Betriebsmodus unter den aktuellen Windbedingungen eine Strömungsablösung auf der Druckseite auftritt oder nicht.

Ein Betriebsmodus ist dann grundsätzlich zulässig, wenn der aerodynamische Kennwert für die aktuellen Windbedingungen angibt, dass keine Strömungsablösung auftritt.

Der aerodynamische Kennwert kann in dem zentralen Parkrechner 122 tabelliert bzw. verfügbar sein oder er kann auf den einzelnen Windenergieanlagen 100 verfügbar sein, die dann die Bestimmung der Zulässigkeit eines Betriebsmodus selbständig durchführen.

In diesem Schritt 340 kann die Zulässigkeit nur eines bestimmten, gewünschten Betriebsmodus bestimmt werden. Beispielsweise kann der zentrale Parkrechner 122 eine Zulässigkeit eines Betriebsmodus mit einer bestimmten Leistungsabregelung bestimmen. Alternativ können auch mehrere verschiedene Zulässigkeiten von Betriebsmodi in Schritt 340 bestimmt werden. Beispielsweise kann die Zulässigkeit unter Verwendung des aerodynamischen Kennwertes für verschiedene Stufen der Leistungsabregelung bestimmt werden.

Besonders vorteilhaft muss nicht zu jeder Zeit die Zulässigkeit sämtlicher Betriebsmodi geprüft werden, sondern die Prüfung wird auf potentiell in Frage kommende Betriebsmodi beschränkt. Dadurch kann die Anforderung an die Rechenleistung, beispielsweise des zentralen Parkrechners 122 niedrig gehalten werden und die Verarbeitungszeit, bis das Ergebnis des Schrittes 340 zur Verfügung steht, reduziert werden.

Der aerodynamische Kennwert ist in einem besonders bevorzugten Beispiel ein kritischer Pitchwinkel, der unter den gegebenen Bedingungen für einen bestimmten Betriebsmodus nicht überschritten werden darf, damit dieser Betriebsmodus als zulässig bestimmt wird.

Schließlich werden unter Heranziehung der in Schritt 340 bestimmten Zulässigkeiten in einem Schritt 350 die Windenergieanlagen 100 derart betrieben, d.h. die Betriebsmodi der Windenergieanlagen 100 derart eingestellt, dass jede der betriebenen Windenergieanlagen 100 in einem zulässigen Betriebsmodus betrieben wird und der ermittelte Leistungs-Istwert den erhaltenen Leistungs-Sollwert nicht übersteigt.

Hierbei kann, je nach Fall, wenigstens eine der Windenergieanlagen 100 des Windparks nicht betrieben werden, damit wenigstens eine der verbleibenden Windenergieanlagen 100 in einem zulässigen Betriebsmodus betreibbar ist. Dies ist insbesondere für stark abgeregelte Szenarien und/oder hohe Windgeschwindigkeiten von Relevanz.

Die Auswahl des jeweiligen aus mehreren zulässigen Betriebsmodi kann insbesondere nach a) Vergütung, b) Last und/oder c) Schall erfolgen.

Mehrere Betriebsszenarien sind damit vorteilhaft lösbar.

Bei niedrigen Windgeschwindigkeiten laufen Windenergieanlagen 100 im Windpark im leistungsreduzierten Betrieb beispielsweise auf abgesenkter Drehzahl. Wenn die Windgeschwindigkeit zunimmt, laufen sukzessive, je nach Anlagentyp, Windenergieanlagen 100 in einen kritischen Betriebszustand. In diesem Szenario kann durch Anheben der Drehzahl ab einer kritischen Windgeschwindigkeit der kritische Betrieb zu höheren Windgeschwindigkeiten verschoben werden. Dies wird durch die Bestimmung der zulässigen Betriebsmodi erreicht.

Bei hohen Windgeschwindigkeiten, laufen die Windenergieanlagen 100 beispielsweise in einem leistungsoptimierten Betrieb auf Volllast. Wird nun eine Leistungsabregelung angefordert können Windenergieanlagen 100 je nach Anlagentyp und angeforderten Leistungsniveau in einen kritischen Betriebszustand laufen. In diesem Szenario wird die Nenndrehzahl bei Leistungsreduzierung vorzugsweise beibehalten. Ein kritischer Betrieb wird demnach zu kleineren Leistungsstufen und/oder höheren Windgeschwindigkeiten verschoben.

So kann die Bestimmung der zulässigen Betriebsmodi einen Betrieb auf reduzierter Drehzahl bis in eine Sturmregelung, die bei einen Schwellwert überschreitender Windgeschwindigkeit Anwendung findet, ermöglichen, da im Betrieb kein negativer Stall auftritt. Vorzugsweise wird im Vergleich zu bisher bekannten Regelungen die Drehzahl ab einer vorbestimmten Windgeschwindigkeit bis in die Sturmregelung angehoben. Alternativ erfolgt zunächst eine Anhebung der Drehzahl, woran sich bei weiter ansteigender Windgeschwindigkeit dann ein Absenken der Drehzahl auf einen unkritischen Wert für das Auftreten von negativem Stall anschließt.

Zusammenfassend muss also die Leistungsreduzierung bei hohen Windgeschwindigkeiten in Windparks 112 aerodynamische Randbedingungen berücksichtigen. Hierfür wird als Lösung beispielsweise eine Anhebung auf bzw. eine Beibehaltung der Nenndrehzahl zur Verschiebung kritischer Betriebspunkte zu höheren Windgeschwindigkeiten bzw. kleineren Leistungsstufen vorgeschlagen.

Alternativ ist die Kombination des beschriebenen Verfahrens mit einer regelbaren aerodynamischen Bremse im Innenblattbereich und/oder mit Energiespeicherlösungen vorstellbar. Die regelbare aerodynamische Bremse kann beispielsweise Klappen oder ähnliche bewegbare Anbauteile umfassen. Beide zusätzlichen Konzepte erweitern den Einsatzbereich des Windparks 112 bzw. die Bandbreite zulässiger Betriebsmodi der einzelnen Windenergieanlagen 100.

## Patentansprüche

1. Verfahren (300) zum Betreiben eines Windparks (112) mit mindestens zwei Windenergieanlagen (100), wobei die Windenergieanlagen (100) jeweils einen aerodynamischen Rotor (106) umfassen, wobei die Rotoren (106) jeweils einen aerodynamischen Kennwert aufweisen, wobei das Verfahren die folgenden Schritte aufweist:
- Erhalten (310) eines Leistungs-Sollwertes des Windparks (112), insbesondere eines Sollwertes der in ein elektrisches Versorgungsnetz einzuspeisenden elektrischen Leistung des Windparks (112),
- Ermitteln (320) eines Leistungs-Istwertes des Windparks (112) als Summe elektrischer Ist-Leistungen der betriebenen Windenergieanlagen (100),
**dadurch gekennzeichnet, dass** das Verfahren ferner aufweist:
- Bestimmen (340) einer Zulässigkeit eines leistungsreduzierten Betriebsmodus jeder der Windenergieanlagen (100) des Windparks (112) anhand des zugehörigen aerodynamischen Kennwertes,
- Betreiben (350) der Windenergieanlagen (100) des Windparks (112) derart, dass jede der betriebenen Windenergieanlagen (100) in einem zulässigen Betriebsmodus betrieben wird und der ermittelte Leistungs-Istwert den erhaltenen Leistungs-Sollwert nicht übersteigt.

2. Verfahren (300) nach Anspruch 1, ferner aufweisend:
- Bestimmen (330), anhand des erhaltenen Leistungs-Sollwertes, ob ein leistungsreduzierter Betrieb wenigstens einer der Windenergieanlagen (100) des Windparks (112) erforderlich ist.

3. Verfahren (300) nach Anspruch 1 oder 2, wobei
- wenigstens eine der Windenergieanlagen (100) des Windparks (112) nicht betrieben wird, damit wenigstens eine der verbleibenden Windenergieanlagen (100) in einem zulässigen Betriebsmodus betreibbar ist.

4. Verfahren (300) nach einem der vorstehenden Ansprüche, wobei der aerodynamische Kennwert für eine Strömungsablösung, insbesondere auf einer Druckseite eines Rotorblattes (108) des Rotors (106), indikativ ist.

5. Verfahren (300) nach Anspruch 4, wobei der aerodynamische Kennwert einen kritischen Pitchwinkel umfasst, wobei die Strömungsablösung insbesondere bei einer Überschreitung des kritischen Pitchwinkels erfolgt.

6. Verfahren (300) nach einem der vorstehenden Ansprüche, wobei der aerodynamische Kennwert anhand eines Kennfeldes ermittelt wird, wobei das Kennfeld den aerodynamischen Kennwert insbesondere als Funktion einer Drehzahl der Windenergieanlage (100), einer Leistungsstufe und optional eines Verschmutzungsgrades des Rotors (106) bestimmt.

7. Verfahren (300) nach Anspruch 6, wobei jede der Windenergieanlagen (100) innerhalb des zulässigen Raumes des Kennfeldes betrieben wird.

8. Verfahren (300) nach einem der vorstehenden Ansprüche, wobei der Betriebsmodus aus den zulässigen Betriebsmodi der einzelnen Anlagen anhand wenigstens einer der nachfolgenden Kriterien ausgewählt wird:
a) Vergütung
b) Last
c) Schall.

9. Verfahren (300) nach einem der vorstehenden Ansprüche, wobei der aerodynamische Kennwert individuell für jede der Windenergieanlagen bestimmt wird.

10. Verfahren (300) nach einem der vorstehenden Ansprüche, wobei das Bestimmen einer Zulässigkeit eines leistungsreduzierten Betriebsmodus jeder der Windenergieanlagen (100) eine Bestimmung einer Soll-Drehzahl des aerodynamischen Rotors (106) umfasst und der aerodynamische Kennwert bei der Bestimmung der Soll-Drehzahl des aerodynamischen Rotors berücksichtigt wird, wobei der Betrieb der Windenergieanlage (100) im dem leistungsreduzierten Betriebsmodus insbesondere eine Reduktion der Soll-Drehzahl in einem ersten Betriebsbereich und eine Erhöhung der Soll-Drehzahl in einem zweiten Betriebsbereich umfasst.

11. Verfahren (300) nach einem der vorstehenden Ansprüche, wobei der Betrieb der Windenergieanlage (100) in dem leistungsreduzierten Betriebsmodus eine Veränderung, insbesondere eine Reduktion, eines Pitchwinkels des Rotors (106) umfasst.

12. Verfahren (300) nach einem der vorstehenden Ansprüche, wobei der aerodynamische Rotor (106) mit einem elektrischen Generator gekoppelt ist und der Betrieb der Windenergieanlage (100) im dem leistungsreduzierten Betriebsmodus eine Veränderung, insbesondere eine Reduktion, eines Generatormoments des elektrischen Generators umfasst.

13. Verfahren (300) nach einem der vorstehenden Ansprüche, wobei die Leistung, insbesondere die elektrische Wirkleistung am Generatorausgang, der Windenergieanlage (100) in dem leistungsreduzierten Betriebsmodus auf einen vorbestimmten Leistungswert und/oder um einen vorbestimmten Leistungsbetrag reduziert ist.

14. Verfahren (300) nach Anspruch 13, wobei zumindest einer der aerodynamischen Kennwerte bei der Bestimmung zumindest einer Soll-Drehzahl einer der aerodynamischen Rotoren (106) berücksichtigt wird.

15. Windpark (112) mit wenigstens zwei Windenergieanlagen (100) und einer Windparksteuerung (122), wobei die Windparksteuerung (122) zur Durchführung des Verfahrens (300) nach einem der vorstehenden Ansprüche ausgebildet ist.

## Claims

1. Method (300) for operating a wind farm (112) having at least two wind power installations (100), wherein the wind power installations (100) each comprise an aerodynamic rotor (106), wherein the rotors (106) each have an aerodynamic characteristic value, wherein the method comprises the following steps:
- obtaining (310) a setpoint power value of the wind farm (112), in particular a setpoint value of the electrical power of the wind farm (112) that is to be fed into an electrical supply network,
- ascertaining (320) an actual power value of the wind farm (112) as the sum of actual electrical powers of the operated wind power installations (100),
**characterized in that** the method also comprises:
- determining (340) a permissibility of a power-reduced operating mode of each of the wind power installations (100) of the wind farm (112) on the basis of the associated aerodynamic characteristic value,
- operating (350) the wind power installations (100) of the wind farm (112) in such a way that each of the operated wind power installations (100) is operated in a permissible operating mode and the ascertained actual power value does not exceed the obtained setpoint power value.

2. Method (300) according to Claim 1, further comprising:
- determining (330), on the basis of the obtained setpoint power value, whether a power-reduced operation of at least one of the wind power installations (100) of the wind farm (112) is required.

3. Method (300) according to Claim 1 or 2, wherein
- at least one of the wind power installations (100) of the wind farm (112) is not operated in order for at least one of the remaining wind power installations (100) to be able to be operated in a permissible operating mode.

4. Method (300) according to one of the preceding claims, wherein the aerodynamic characteristic value is indicative of a flow separation, in particular on a pressure side of a rotor blade (108) of the rotor (106).

5. Method (300) according to Claim 4, wherein the aerodynamic characteristic value comprises a critical pitch angle, wherein the flow separation takes place in particular when the critical pitch angle is exceeded.

6. Method (300) according to one of the preceding claims, wherein the aerodynamic characteristic value is ascertained on the basis of a characteristic map, wherein the characteristic map determines the aerodynamic characteristic value in particular as a function of a rotational speed of the wind power installation (100), a power stage and optionally a degree of soiling of the rotor (106).

7. Method (300) according to Claim 6, wherein each of the wind power installations (100) is operated within the permissible area of the characteristic map.

8. Method (300) according to one of the preceding claims, wherein the operating mode is selected from the permissible operating modes of the individual installations on the basis of at least one of the following criteria:
a) tariff
b) load
c) sound.

9. Method (300) according to one of the preceding claims, wherein the aerodynamic characteristic value is determined individually for each of the wind power installations.

10. Method (300) according to one of the preceding claims, wherein the determination of a permissibility of a power-reduced operating mode of each of the wind power installations (100) comprises a determination of a setpoint rotational speed of the aerodynamic rotor (106) and the aerodynamic characteristic value is taken into account in the determination of the setpoint rotational speed of the aerodynamic rotor, wherein the operation of the wind power installation (100) in the power-reduced operating mode comprises in particular a reduction of the setpoint rotational speed in a first operating range and an increase of the setpoint rotational speed in a second operating range.

11. Method (300) according to one of the preceding claims, wherein the operation of the wind power installation (100) in the power-reduced operating mode involves a change, in particular a reduction, in a pitch angle of the rotor (106).

12. Method (300) according to one of the preceding claims, wherein the aerodynamic rotor (106) is coupled to an electrical generator and the operation of the wind power installation (100) in the power-reduced operating mode involves a change, in particular a reduction, in a generator torque of the electrical generator.

13. Method (300) according to one of the preceding claims, wherein the power, in particular the active electrical power at the generator output, of the wind power installation (100) in the power-reduced operating mode is reduced to a predetermined power value and/or by a predetermined absolute power value.

14. Method (300) according to Claim 13, wherein at least one of the aerodynamic characteristic values is taken into account in the determination of at least one setpoint rotational speed of one of the aerodynamic rotors (106).

15. Wind farm (112) having at least two wind power installations (100) and a wind farm control system (122), wherein the wind farm control system (122) is designed to carry out the method (300) according to one of the preceding claims.

## Revendications

1. Procédé (300) d'exploitation d'un parc éolien (112) avec au moins deux éoliennes (100), dans lequel les éoliennes (100) comprennent chacune un rotor (106) aérodynamique, dans lequel les rotors (106) présentent chacun une valeur caractéristique aérodynamique, dans lequel le procédé présente les étapes suivantes :
- la réception (310) d'une consigne de puissance du parc éolien (112), en particulier d'une consigne de puissance électrique du parc éolien (112) à injecter dans un réseau d'alimentation électrique,
- la détermination (320) d'une valeur réelle de puissance du parc éolien (112) sous forme de somme de puissances électriques réelles des éoliennes (100) exploitées,
**caractérisé en ce que** le procédé présente en outre :
- l'établissement (340) d'une admissibilité d'un mode de fonctionnement à puissance réduite de chacune des éoliennes (100) du parc éolien (112) au moyen de la valeur caractéristique aérodynamique associée,
- l'exploitation (350) des éoliennes (100) du parc éolien (112) de telle sorte que chacune des éoliennes (100) exploitées fonctionne dans un mode de fonctionnement autorisé et que la valeur réelle de puissance déterminée ne dépasse pas la valeur de consigne de puissance reçue.

2. Procédé (300) selon la revendication 1, présentant en outre :
- le fait d'établir (330), au moyen de la consigne de puissance reçue, si un fonctionnement à puissance réduite d'au moins une des éoliennes (100) du parc éolien (112) est nécessaire.

3. Procédé (300) selon la revendication 1 ou 2, dans lequel
- au moins une des éoliennes (100) du parc éolien (112) n'est pas exploitée de sorte qu'au moins l'une des éoliennes (100) restantes puisse fonctionner dans un mode de fonctionnement autorisé.

4. Procédé (300) selon l'une quelconque des revendications précédentes, dans lequel la valeur caractéristique aérodynamique indique un décollement des filets d'air, en particulier sur un côté de pression d'une pale de rotor (108) du rotor (106).

5. Procédé (300) selon la revendication 4, dans lequel la valeur caractéristique aérodynamique comprend un angle de calage critique, dans lequel le décollement des filets d'air s'effectue en particulier lors d'un dépassement de l'angle de calage critique.

6. Procédé (300) selon l'une quelconque des revendications précédentes, dans lequel la valeur caractéristique aérodynamique est déterminée au moyen d'un champ caractéristique, dans lequel le champ caractéristique établit la valeur caractéristique aérodynamique en particulier en fonction d'une vitesse de rotation de l'éolienne (100), d'un niveau de puissance et facultativement d'un degré d'encrassement du rotor (106).

7. Procédé (300) selon la revendication 6, dans lequel chacune des éoliennes (100) fonctionne à l'intérieur de l'espace autorisé du champ caractéristique.

8. Procédé (300) selon l'une quelconque des revendications précédentes, dans lequel le mode de fonctionnement est sélectionné parmi les modes de fonctionnement autorisés des différentes éoliennes en fonction d'au moins un des critères suivants :
a) rémunération
b) charge
c) bruit.

9. Procédé (300) selon l'une quelconque des revendications précédentes, dans lequel la valeur caractéristique aérodynamique est établie individuellement pour chacune des éoliennes.

10. Procédé (300) selon l'une quelconque des revendications précédentes, dans lequel l'établissement d'une admissibilité d'un mode de fonctionnement à puissance réduite de chacune des éoliennes (100) comprend un établissement d'une vitesse de rotation de consigne du rotor (106) aérodynamique et la valeur caractéristique aérodynamique est prise en compte lors de l'établissement de la vitesse de rotation de consigne du rotor aérodynamique, dans lequel le fonctionnement de l'éolienne (100) dans le mode de fonctionnement à puissance réduite comprend en particulier une réduction de la vitesse de rotation de consigne dans une première plage de fonctionnement et une augmentation de la vitesse de rotation de consigne dans une seconde plage de fonctionnement.

11. Procédé (300) selon l'une quelconque des revendications précédentes, dans lequel le fonctionnement de l'éolienne (100) dans le mode de fonctionnement à puissance réduite comprend une modification, en particulier une réduction, d'un angle de calage du rotor (106).

12. Procédé (300) selon l'une quelconque des revendications précédentes, dans lequel le rotor (106) aérodynamique est couplé à un générateur électrique et le fonctionnement de l'éolienne (100) dans le mode de fonctionnement à puissance réduite comprend une modification, en particulier une réduction, d'un couple de générateur du générateur électrique.

13. Procédé (300) selon l'une quelconque des revendications précédentes, dans lequel la puissance, en particulier la puissance active électrique à la sortie du générateur, de l'éolienne (100) est réduite à une valeur de puissance pré-établie et/ou d'une grandeur de puissance pré-établie dans le mode de fonctionnement à puissance réduite.

14. Procédé (300) selon la revendication 13, dans lequel au moins l'une des valeurs caractéristiques aérodynamiques est prise en compte lors de l'établissement d'au moins une vitesse de rotation de consigne d'un des rotors (106) aérodynamiques.

15. Parc éolien (112) avec au moins deux éoliennes (100) et une commande de parc éolien (122), dans lequel la commande de parc éolien (122) est réalisée pour mettre en œuvre le procédé (300) selon l'une quelconque des revendications précédentes.
